# EUROPÄISCHE PATENTSCHRIFT

(11) **EP 0 427 144 B1**
(45) Veröffentlichungstag und Bekanntmachung des Hinweises auf die Patenterteilung: **24.05.1995**
(21) Anmeldenummer: 90121051.8
(22) Anmeldetag: 02.11.1990
(51) Int. Cl.: B60Q 1/26

(54) **Anordnung von Signaleinrichtungen an Kraftfahrzeugkarosserien**
Signal device for vehicle body
Dispositif de signalisation monté sur la carrosserie de véhicule

(30) Priorität: 07.11.1989 DE 3936971; 22.09.1990 DE 4030073
(43) Veröffentlichungstag der Anmeldung: 15.05.1991
(73) Patentinhaber: Iveco Magirus Aktiengesellschaft, D-89017 Ulm (DE)
(72) Erfinder: Friesinger, Albert, W-7906 Blaustein (DE)
(74) Vertreter: TER MEER STEINMEISTER & PARTNER GbR

(56) Entgegenhaltungen:
- DE-U- 8 809 155
- GB-A- 959 625

## Beschreibung

Die Erfindung betrifft Anordnung einer Signaleinrichtung an einer Kraftfahrzeug-Karosserie gemäß dem Oberbegriff des Hauptanspruchs.

Bei bekannten Ausführungen sind die Warneinrichtungen - optisch oder akustisch - in eine Erhöhung der Fahrzeugdächer integriert, oder es sind die Warneinrichtungen dachseitig montiert. Durch die Erhöhung der Fahrzeugdächer wird die Gesamthöhe des Fahrzeugs vergrößert (vgl. DE-GM 88 14 711.8, DE-OS 35 45 727 , DE-GM 88 09 155.4).

Gemäß einer anderen bekannten Ausführungsvariante ("MORITA") sind bei einem Brandschutzfahrzeug die Warneinrichtungen in einer transparenten Abdeckhaube untergebracht und an einer vorderen Schrägseite des Fahrzeugs oberhalb der Windschutzscheibe über die gesamte Breite des Fahrzeugs montiert. Die Anordnung ist so getroffen, daß sie aufgrund der Schräganordnung nur kleine Warneinrichtungen aufnehmen kann. Trotz des geringen Aufnahmeraums der bekannten Anordnung von Signaleinrichtungen übersteigt sie die Höhe des Fahrerhausdachs. Die vorderste Erstreckung der Anordnung liegt in etwa in Höhe des oberen Rands der Windschutzscheibe.

Aufgabe der Erfindung ist die Schaffung einer Anordnung von Signaleinrichtungen der eingangs genannten Art, die einfach aufgebaut ist, die Fahrzeugdachhöhe praktisch nicht übersteigt, viel Aufnahmeraum für Signaleinrichtungen bei kompaktem Aufbau bietet und gleichwohl Zusatzfunktionen erfüllt.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 9.

Wesen der Erfindung ist, die Signaleinrichtungsanordnung an der Stirn- oder Heckseite des Fahrzeugs am oberen Windschutzrahmen nach vorne bzw. nach hinten derart vorzusehen, daß die Oberseite der Anordnung in etwa in Höhe des Fahrzeugdachs gelegen ist, und daß an der nach vorne oder nach hinten stehenden Anordnung unterseitig zumindest eine Außensonnenblende befestigt ist. Gerade durch die nach vorne oder nach hinten stehende Bauweise der Anordnung ist es möglich, an der Unterseite der Anordnung eine außenliegende Sonnenblende derart zu integrieren, daß ein gutes optisches Erscheinungsbild gegeben ist. Besonders vorteilhaft ist es, die Außensonnenblende an der vorderen Unterkante der Anordnung um eine untere Querachse nach unten verstellbar vorzusehen. Bei Nichtbenutzung liegt die Außensonnenblende an der Unterseite der Signaleinrichtungsanordnung an. Eine geringfügige Schwenkbewegung der Außensonnenblende nach unten genügt, um einen optimalen Sonnenblendschutz für Fahrer und Beifahrer einzustellen. Insbesondere kann die Außensonnenblende flächenmäßig klein gestaltet sein, ohne den Blendschutz nennenswert einzuschränken. Bekannte außenliegende Sonnenblenden werden über gesonderte Halterungen, beispielsweise Längsstangen gemäß GB-PS 959 625, direkt am Fahrzeugdach montiert. Sie sind an der Fahrzeugvorderseite feststehend und mithin strömungsungünstig am Fahrzeug angebaut. Zwischen der Sonnenblende und der Karosserie entsteht ein Zwischenraum, der bei Fahrzeugfahrt Geräusche und Wirbel entstehen läßt, so daß nachteilige Fahreigenschaften auftreten, insbesondere auch für eine zusätzliche Verschmutzung der Windschutzscheibe verantwortlich sind. Von Vorteil ist, daß bei der Erfindung viel Aufnahmeraum in einer gleichwohl kompakten Signaleinrichtungsanordnung geschaffen wird. Es können Serienteile von Rundumkennleuchten oder Blitzleuchten so eingebaut werden, daß die Höhe des Fahrzeugs praktisch nicht vergrößert wird. Die außenliegende Sonnenblende wird insbesondere in den Boden einer transparenten Abdeckhaube aus Polycarbonat integriert, welches schlagfest und verschiedenfarbig, z.B. blau, rot oder gelb, ausgebildet sein kann. Modulbauweise ist gegeben, so daß die Anordnung einschließlich ein- oder mehrteiliger Außensonnenblende für unterschiedliche Fahrzeugtypen bzw. Fahrzeugbreiten verwendet werden kann. Es können insbesondere im wesentlichen gleich ausgebildete Eckmodule Verwendung finden, welche mit verschieden langen Zwischenmodulen kombiniert werden können. Ist die außenliegende Sonnenblende in ihre Nichtgebrauchslage nach oben verschwenkt, ist keine Einschränkung des Sichtwinkels für Fahrer und Beifahrer gegeben. Die Verstellung der außenliegenden Sonnenblende kann je nach Sonneneinstrahlung von innen motorisch oder mechanisch erfolgen.

Nachfolgend wird die Erfindung anhand eines Ausführungsbeispiels unter Bezugnahme auf beigefügte Zeichnung näher erläutert; es zeigen:

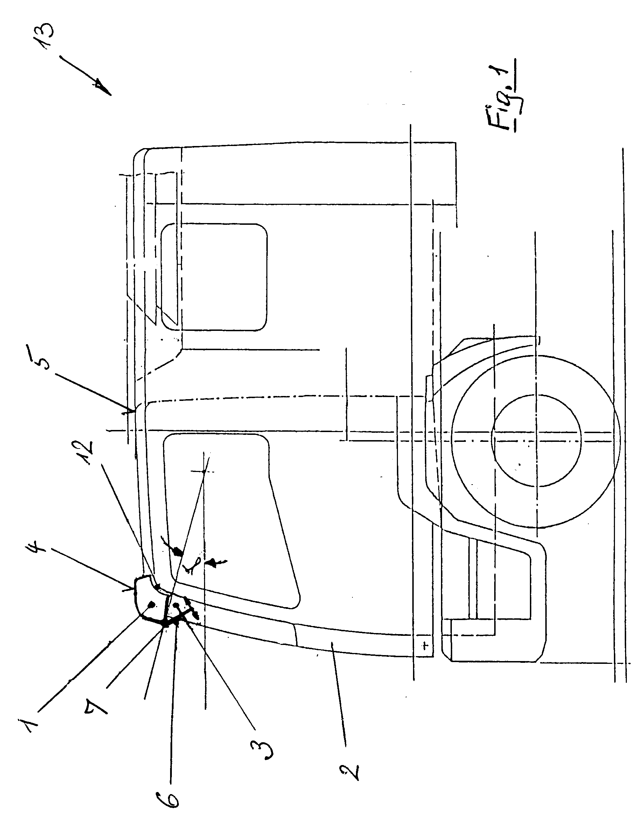

- Fig. 1: eine schematische Teilseitenansicht eines Brandschutzfahrzeugs mit der Erfindung, und
- Fig. 2: eine schematische Draufsicht auf die Anordnung nach Fig. 1.

Gemäß Zeichnung ist bei einem Brandschutzfahrzeug (13) an der Karosserie (2) oberhalb des vorderen Sichtfensters (3) für Fahrer und Beifahrer vor dem eigentlichen Fahrzeugdach (5) eine Anordnung (1) von Signaleinrichtungen über die gesamte Breitseite des Fahrzeugs befestigt, wobei elastische Zwischenstücke (12) zwischen Anordnung (1) und Windschutzrahmen bzw. Karosserie (2) vorgesehen sind.

Die Oberseite (4) der Anordnung (1) liegt in etwa in Höhe des Fahrzeugdachs (5). Die Unterseite der Anordnung (1) liegt in etwa in Höhe der unteren Kante des Windschutzscheibenrahmens und besitzt an vorderster Stelle eine Querachse (7), an welcher eine Außensonnenblende (6) schwenkbar befestigt ist. Die Außensonnenblende (6) ist an der Unterseite der Anordnung (1) derart angebracht, daß bei Nichtbenutzung der Außensonnenblende (6) in ihrer hochgeschwenkten Lage letztere praktisch dicht an der Unterseite der Anordnung (1) anliegt. Ein Fahrer hat dann einen Sichtwinkel γ , der uneingeschränkt bis zum oberen Windschutzscheibenrahmen reicht. Durch geringfügige Stellbewegung der Sonnenblende (6) nach unten wird selbst bei einer kleinflächigen Außensonnenblende (6) eine große Blendschutzwirkung erreicht. Ersichtlich ist die Anordnung insgesamt so getroffen, daß bei benutzter und unbenutzter Außensonnenblende (6) gute Strömungseigenschaften gegeben sind.

Die Abdeckhaube der Anordnung (1) ist vorzugsweise aus einem transparenten Material wie Polycarbonat gefertigt, welches schlagfest und insbesondere verschiedenfarbig (blau, rot oder gelb) ausgebildet ist.

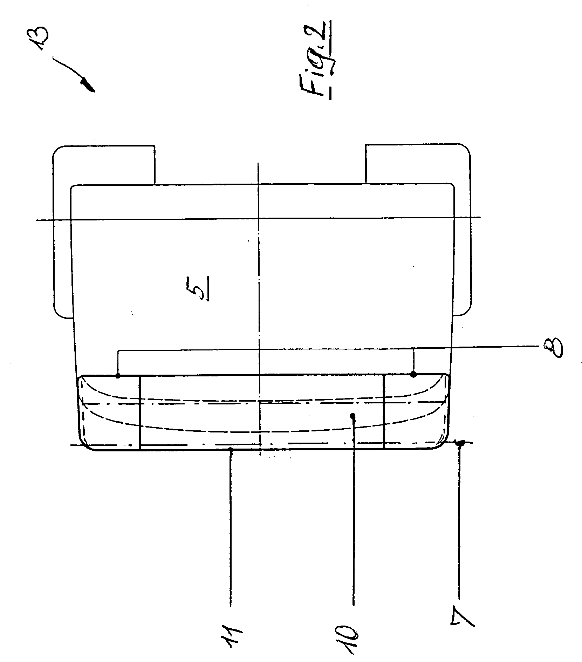

Wie dies insbesondere der Fig. 2 zu entnehmen ist, ist die Anordnung (1) aus zwei im wesentlichen gleich aufgebauten Eckmodulen (8) und einem Zwischenmodul (10) aufgebaut. Bei unterschiedlich langen Zwischenmodulen (10) können gleich ausgebildete Eckmodule (8) verwendet werden, um bei unterschiedlichen Fahrzeugbreiten eine Anordnung der Signaleinrichtungen über die gesamte Karosseriebreite einzurichten. Handelsübliche Blitzleuchten oder Teile von Rundumkennleuchten befinden sich in den Eckmodulen (8).

Alle in der Beschreibung erwähnten und/oder in der Zeichnung gezeigten neuen Merkmale allein oder in sinnvoller Kombination sind erfindungswesentlich, auch soweit sie in den Ansprüchen nicht beansprucht sind.

## Patentansprüche

1. Anordnung einer Signaleinrichtung an einer Kraftfahrzeug-Karosserie in Erstreckung im wesentlichen über die gesamte Fahrzeugbreite oberhalb eines Sichtfensters (3) der Kraftfahrzeug-Karosserie (2), dadurch **gekennzeichnet**, daß die Oberseite (4) der Signaleinrichtung (1) im wesentlichen in der Höhe des Fahrzeugdachs (5) liegt und an dieses nach vorne oder hinten anschließt, daß die Signaleinrichtung aus zwei seitlichen Eckmodulen (8) und zumindest einem die beiden Eckmodule (8) verbindenden Zwischenmodul (10) zusammengesetzt ist, daß an der Signaleinrichtung (1) wenigstens eine Außen-Sonnenblende (6) in einer vorderen unteren Querachse (7) befestigt ist, und daß die Sonnenblende nach unten verstellbar ist und in ihrer hochgeschwenkten Lage dicht an der Unterseite der Signaleinrichtung anliegt.

2. Anordnung nach Anspruch 1, dadurch **gekennzeichnet**, daß die Außen-Sonnenblende (6) vom Fahrzeuginnenraum aus mechanisch von Hand oder durch Motorkraft verstellbar ist.

3. Anordnung nach Anspruch 1 oder 2, dadurch **gekennzeichnet**, daß die seitlichen Eckmodule (8) im wesentlichen gleich oder spiegelbildlich gleich zueinander ausgebildet sind.

4. Anordnung nach Anspruch 3, dadurch **gekennzeichnet**, daß wenigstens die seitlichen Eckmodule (8) eine transparente Abdeckung (11) aus Polykarbonat oder dergleichen aufweisen und Signalleuchten, insbesondere Blitzleuchten oder Rundumkennleuchten aufnehmen.

5. Anordnung nach einem der Ansprüche 1 bis 4, dadurch **gekennzeichnet**, daß mehrere Außen-Sonnenblenden (6) vorgesehen sind.

6. Anordnung nach Anspruch 5, dadurch **gekennzeichnet**, daß die Signaleinrichtung über elastische Zwischenstücke (12) am oberen Windschutzrahmens des Fahrzeugs befestigbar ist.

7. Anordnung nach einem der Ansprüche 1 bis 6, dadurch **gekennzeichnet**, daß die Signaleinrichtung (1) an denjenigen Befestigungspunkten der Fahrzeugkarosserie (2) befestigt ist, die ohnehin für bekannte Außen-Sonnenblenden vorgesehen sind.

## Claims

1. An arrangement of a signalling device on a motor vehicle body in extension substantially over the entire width of the vehicle above a viewing window (3) of the motor vehicle body (2), characterised in that the upper side (4) of the signalling device (1) is situated substantially at the height of the vehicle roof (5) and adjoins the latter at the front or rear, in that the signalling device comprises two lateral corner modules (8) and at least one intermediate module (10) connecting the two corner modules (8), in that at least one external sun visor (6) is mounted on the signalling device (1) on a front lower transverse axis (7), and in that the sun visor (6) is downwardly movable and in its pivoted-up position closely adjoins the underside of the signalling device.

2. An arrangement according to Claim 1, characterised in that the external sun visor (6) can be moved mechanically by hand or by motive power from the vehicle interior.

3. An arrangement according to Claim 1 or 2, characterised in that the lateral corner modules (8) are designed to be substantially the same or symmetrical to one another.

4. An arrangement according to Claim 3, characterised in that at least the lateral corner modules (8) have a transparent cover (11) of polycarbonate or the like, and accommodate signalling lights, in particular flashing lights or rotating flashing beacons.

5. An arrangement according to any one of Claims 1 to 4, characterised in that a plurality of external sun visors (6) are provided.

6. An arrangement according to Claim 5, characterised in that the signalling device can be secured to the upper windscreen frame of the vehicle via resilient connecting pieces (12).

7. An arrangement according to any one of Claims 1 to 6, characterised in that the signalling device (1) is mounted at those mounting points of the vehicle body (2) which in any case are provided for known external sun visors.

## Revendications

1. Ensemble de dispositifs de signalisation monté sur la carrosserie d'un véhicule et occupant sensiblement toute sa largeur au-dessus du pare-brise (3) de cette carrosserie (2), caractérisé en ce que la face supérieure (4) de l'ensemble (1) se trouve sensiblement à la hauteur du toit (5) du véhicule auquel il est raccordé vers l'avant ou vers l'arrière, cet ensemble (1) étant composé de deux modules latéraux de coin (8) encadrant au moins un module intermédiaire (10), un pare-soleil externe (6) étant monté sur un axe transversal (7) fixe en avant et en bas de l'ensemble (1) de manière à pouvoir être réglé vers le bas et également venir, en position relevée, s'appliquer jointivement sur la face inférieure de l'ensemble (1).

2. Ensemble selon la revendication 1, caractérisé en ce que le pare-soleil externe (6) peut être déplacé, à partir de la cabine de conduite, à la main ou au moyen d'un moteur.

3. Ensemble selon la revendication 1 ou 2, caractérisé en ce que les modules latéraux de coin (8) sont identiques ou symétriques.

4. Ensemble selon la revendication 3, caractérisé en ce qu'au moins les modules de coin (8) ont une couverture transparente (11) en polycarbonate ou matière analogue et recouvrent les lampes de signalisation, notamment des lampes à éclats ou à feux tournants.

5. Ensemble selon une des revendications 1 à 4, caractérisé en ce qu'il comporte plusieurs pare-soleil externes (6).

6. Ensemble selon la revendication 5, caractérisé en ce qu'il peut être fixé par des intercalaires élastiques (12) sur le bord supérieur du pare-brise.

7. Ensemble selon une des revendications 1 à 6, caractérisé en ce qu'il est fixé sur les points de fixation prévus sur la carrosserie (2) pour recevoir directement des pare-soleil usuels.
